Europäisches Patentamt

European Patent Office

Office européen des brevets

(11) Publication number: **0 160 120**
**B1**

(12) **EUROPEAN PATENT SPECIFICATION**

(45) Date of publication of patent specification: **19.11.87**

(21) Application number: **84110318.7**

(22) Date of filing: **30.08.84**

(51) Int. Cl.⁴: **F 16 K 31/06**

(54) Solenoid valve.

(30) Priority: **07.02.84 US 577853**

(43) Date of publication of application:
**06.11.85 Bulletin 85/45**

(45) Publication of the grant of the patent:
**19.11.87 Bulletin 87/47**

(84) Designated Contracting States:
**DE FR GB IT SE**

(56) References cited:
**DE-A-1 550 543**
**DE-A-2 403 770**
**DE-B-2 221 929**
**FR-A-1 202 365**
**GB-A-2 033 059**
**GB-A-2 103 390**

(73) Proprietor: **Sealed Power Corporation**
**100, Terrace Plaza**
**Muskegon Michigan 49443 (US)**

(72) Inventor: **Warrick, Frank G.**
**3654 Brentwood**
**Muskegon Michigan 49441 (US)**

(74) Representative: **Blumbach Weser Bergen**
**Kramer Zwirner Hoffmann Patentanwälte**
**Sonnenbergerstrasse 43**
**D-6200 Wiesbaden 1 (DE)**

Courier Press, Leamington Spa, England.

## Description

The present invention relates to a solenoid valve as comprised in the precharacterizing portion of claim 1.

A solenoid valve of this kind (GB—A—2,033,059) has a valve chamber with a ball in it, which can be attracted magnetically onto a seat where the inlet or supply port is arranged. This means that the valve is normally open and that the inlet or supply port and the outlet or control port are to be arranged on different sides of the valve body. Furthermore, both valve seats are of magnetic material so that there is a certain delay in action due to sticking of the ball against its seat by magnetic remanence. This sticking effect can be reduced by a coating of non-magnetic material on the ball. However, such coating must endure the blows of the switching action and therefore is not so easily to be manufactured. Furthermore, more magnetic energy is needed to move and hold the ball on its seat.

Solenoid valves of the referred to kind are utilized in automatic transmissions and especially are controlled by a microprocessor in the pulse width modulated mode. In such applications also normally closed valves are desirable.

Therefore it is an object of the present invention to provide a normally closed solenoid valve of the referred to kind, which can be used in a pulse width modulated mode or in a steady state directional mode and the pressure control should be exact. Furthermore, the valve should be small and only a minimum number of parts necessary to produce it.

This problem is solved with a solenoid valve of the referred to kind when using the characterizing features of claim 1.

In accordance with the invention, the pulse width modulated valve comprises a valve housing including a transverse wall, an integral extension extending axially from the transverse wall and an integral peripheral wall extending axially from the periphery of the transverse wall in a direction opposite to the direction in which the axial extension extends. The solenoid valve also includes a pole member including a pole piece extending axially inwardly of the housing, an integral transverse wall extending radially outwardly into engagement with the peripheral wall and connected thereto. The pole piece has an axial opening therethrough and defines a first conical seat. The axial extension of the housing has an axial opening aligned with the opening of the pole, an insert is positioned in the axial opening in the axial extension and defines a second seat. A ball is interposed between the first and second seats and has limited movement between the seats. A spring means yieldingly urges the ball into engagement with the second seat. The insert has portions thereof spaced from the walls of the opening into which the insert extends defining passages to the exterior of the axial extension. The housing and pole member define an annular space and a coil assembly is positioned in the annular space, such that when fluid is applied to the axial opening in the insert and the coil is de-energized, the spring means holds the ball against the second seat and prevents flow through the axial opening in the insert while permitting communications between the passages defined by the insert about the ball and second seat through the axial opening in the pole and when the solenoid is energized, the ball is drawn toward the first seat to close communication to the axial opening in the pole and permit flow from the axial opening in the insert past the second seat and through the passages defined by the insert to the exterior of the axial extension.

## Description of the Drawings

FIG. 1 is a schematic of a microprocessor system utilizing the solenoid valve embodying the invention;

FIG. 2 is an elevational view of a first embodiment of the solenoid valve according to invention;

FIG. 3 is a vertical sectional view of the solenoid valve;

FIG. 4 is a fragmentary sectional view taken along the line 4—4 in FIG. 3;

FIG. 5 is a fragmentary sectional view taken along the line 5—5 in FIG. 3;

FIG. 6 is a vertical sectional view of a second embodiment of the solenoid valve;

FIG. 7 is a fragmentary sectional view taken along the line 7—7 in FIG. 6.

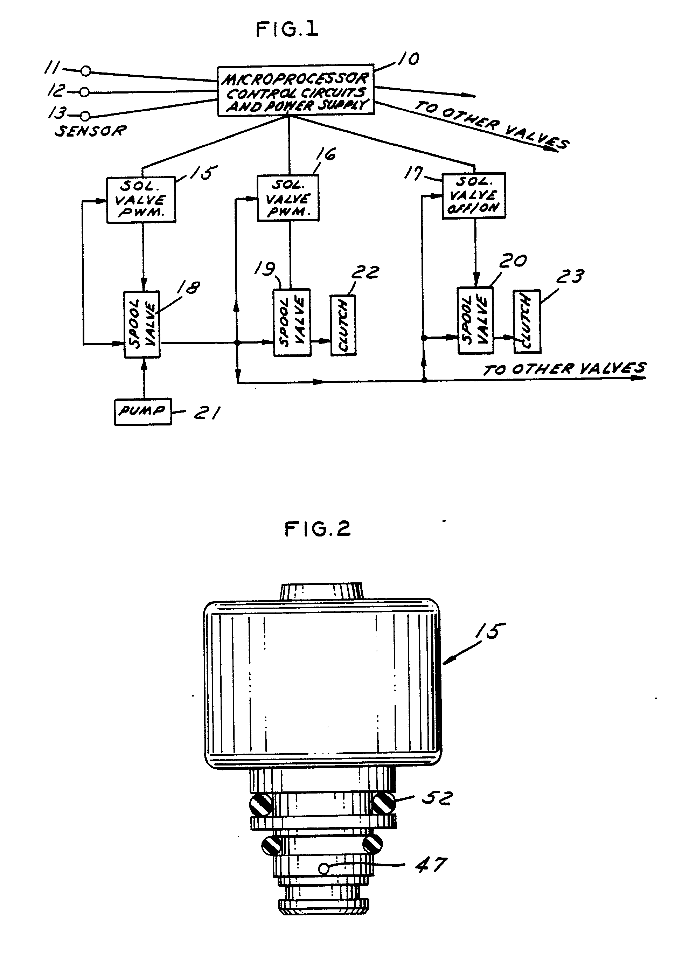

Referring to FIG. 1, solenoid valves 15, 16 embodying the invention are used in a pulse width modulated mode with a control system shown wherein a microprocessor 10 receives signals from sensors 11, 12 and 13 that monitor functions such as road speed, throttle position and engine rpm. Based on such signals, the microprocessor 10 controls the solenoid valves 15, 16 and 17. The solenoid valves 15, 16 provide pilot pressure to control pilot operated spool valves 18, 19. The solenoid valve 17 is of the on-off type controlling the spool valve 20. The spool valve 18 operates to provide fluid under pressure from a pump 21 to the valve 15, solenoid valves 16, 17 and spool valves 19, 20. The spool valve 19 controls a part of the transmission such as a clutch 22 as does the spool valve 20 which controls a clutch 23.

Referring to FIGS. 2—5, the solenoid valve 15 or 16 embodying the invention comprises a housing 26 that includes a transverse wall 27 having an axial extension 28 and an integral peripheral wall 29. The valve further includes a pole member 30 having an axial pole piece 31 extending axially inwardly from an integral transverse wall 32. The peripheral wall 29 is connected to the transverse wall 32 as by bending an edge lip 33 over the periphery of wall 32.

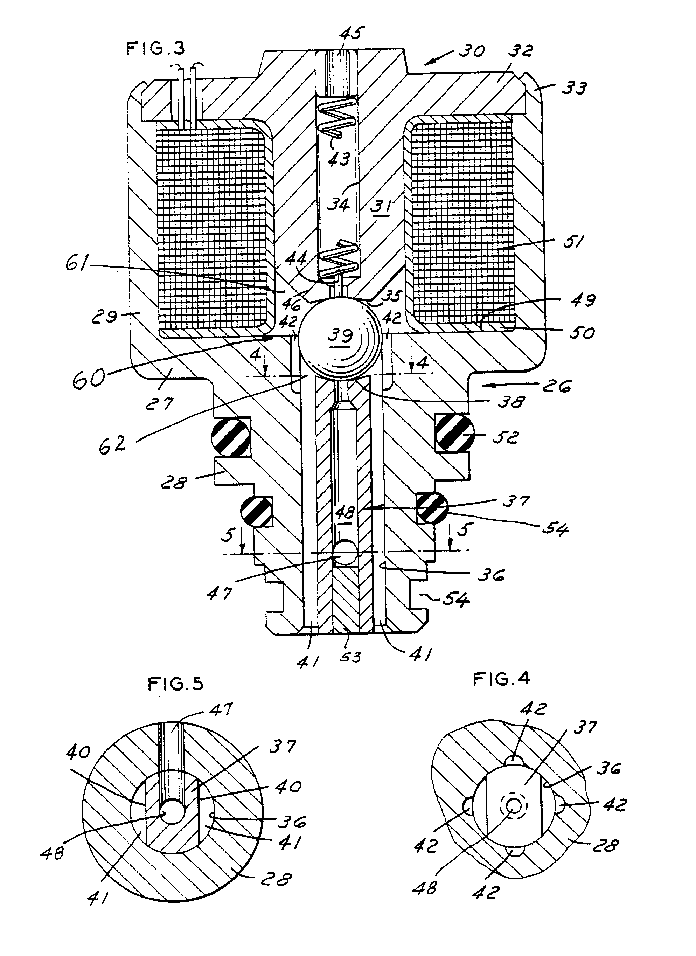

Pole piece 31 is provided with an axial opening 34 and a first frustoconical valve seat 35 at its lower end which is tapered. The axial extension 28 is provided with an axial opening 36 into which an insert 37 of non-magnetic material is press fitted. The upper end of the insert 37 defines a second frustoconical valve seat 38. A ball 39 is interposed between the seats 35, 38 and has limited movement in a valve chamber 60 which has an upper portion 61 adjacent the seat 35 and a lower portion 62 adjacent the seat 38, as viewed in FIG. 3.

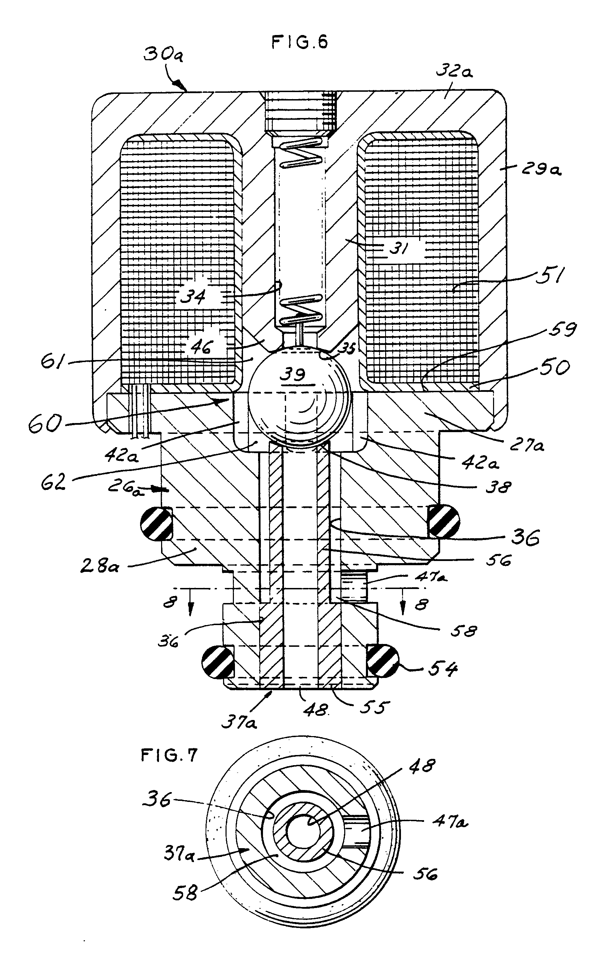

The insert 37 has flattened surface portions 40 on opposed sides thereof which are spaced from the walls of the axial opening 36 so as to define axial passages 41 which extend from the area of the ball 39 to the exterior of the extension 28. Grooves 42 along the opening 36 adjacent seat 38 facilitate flow about the ball 39 from the lower (62) to the upper portion 61 of the valve chamber 60. As shown, the major portion of the ball 39 lies within the valve chamber portion 62 arranged in the transverse wall 27 of the housing 26. The insert 37 also has an axial opening 48, the lower end of which is closed by a plug 53, and which communicates with the exterior of the extension 28 through radial openings 47 in the extension and the insert 37, see Fig. 5.

Spring means in the form of a compression spring 43 and an integral portion 44 of spring 43 are interposed in the opening 34 between an apertured press fitted and welded pin 45 and a narrow portion 46 of the opening 34 to yieldingly urge the ball 39 toward the second seat 38.

The housing 26 and pole member 30 define an annular cavity 49 in which a coil assembly including a coil holder 50 and an annular coil 51 are positioned.

In use, O-rings 52, 54 are provided about the extension 28 so that a supply port, formed by the openings 47, 48, is separated from a control port, formed by the passages 41. The valve can be inserted in the appropriate place in the device such as a transmission with which it is used.

When the coil 51 is de-energized, the spring 43 urges the ball 39 against the second seat 38 so there will be no flow from the supply port formed by the openings 47, 48. However, there will be free communication between the passages 41 as the control port to the grooves 42 about the ball 39 and through the axial opening 34 as the return port to the exterior which is normally connected to a sump or drain.

When the coil 51 is energized, the ball 39 is drawn upwardly as viewed in FIG. 3 against the first seat 35 so that fluid can flow from the supply port (openings 47 and 48) past the ball 39 and through the passages 41 as the control port to the device controlled. Fluid from the pressure source is prevented from flowing out of the opening 34 by seating of the ball 39 against the seat 35.

The flux induced by the coil 51 will follow a path through the pole piece 31 into the transverse wall 32, through the peripheral wall 29 and the transverse wall 27, across the gap between the ball 39 and the opening 36, through the ball 39, across the gap between the ball 39 and pole piece 31, and into the pole piece 31. It should be noted that the seat 38 and, in this case, the entire insert 37 is a non-magnetic material and thus carries no appreciable magnetic flux.

Materials for the flux carrying components are normally low carbon mild steels or sintered irons. As non-magnetic material for the insert 37 an austenitic stainless steel can be used which has high durability.

In a pulse width modulated mode, controlled output pressure is obtained through modulation of the "on" to "off" time during each cycle at any given frequency. The valves have been used at operational frequencies of from 30 to 100 Hertz, but higher or lower frequencies could be used. The operating frequency is normally constant with the amount of "on" time being varied within the cycle to give the proper output pressure. Theoretically, the output pressure in the control port would be zero when the valve is "off" and would be at the level of the input pressure when the valve is "on"; however, due to friction, inertia and elasticity in the hydraulic circuit, the output pressure tends to effectively average somewhere between zero and input depending on the ratio of "on" to "off" time.

Since this is a normally closed valve, in the unenergized state the ball 39 must seal off the inlet pressure through the biasing force of the spring 43. Generally a "pop off" or "start leak" pressure is specified by the end user of the valve. Calibration for "pop off" pressure is made by applying this pressure to the inlet side of the ball either through actual fluid pressure or by mechanical means and adjusting the spring 43 by pushing the roll pin 45 against the spring 43 until the ball 39 just seals off the inlet. The roll pin 45 is then either welded or mechanically staked in place to maintain the calibration.

A clearance of 0.076 to 0.254 mm preferably is maintained between the ball 39 and bore or opening 36 to minimize the air gap between them so as to optimize the magnetic circuit to minimize power requirements. Since the clearance is so small, the grooves 42 are necessary to allow the fluid to flow around the ball 39 and out the return port without undue restriction, and to minimize the hydraulic forces acting on the ball 39. The clearance between ball 39, when it engages one seat, and the other seat ranges between 1,52 and 0,38 mm.

Use of the ball 39 as both a sealing member and as the armature are basically required to obtain the desired performance from the small package size required.

The lead wires from the coil 51 pass through the transverse wall 32 and are then attached to a standard quick connector that also receives the wires from the microprocessor.

In a typical example, the coil 51 is energized at a frequency of 100 Hertz (cycles per second) which allows 10 ms of operation time for each cycle. The outlet pressure is varied by the 10 ms time frame. The longer the signal is applied, the closer the average outlet pressure is to the inlet pressure. Ideally, the ratio of pressure out to pressure in is a straight line function of the ratio of energized time to available cycle time, that is, at an "on" time of 3 ms (or 30% of 10 ms available), the output pressure would be 30% of the input pressure. In actual practice, it takes about approximately 1,6 ms of "on" time to unseat the ball. This lag is due to the time required to build sufficient magnetic force to overcome the spring force and ball inertia; likewise, it takes approximately 1,5 ms for the ball to return to the normally closed position once the coil current is shut off. This device is able to accurately linearly regulate oil output pressure at 10 to 90% input pressure.

Referring to FIGS. 6 and 7 showing the second embodiment, for clarity like parts are given the same reference numerals as in the first embodiment, whereas modified parts are provided with the suffix a. Insert 37a includes a cylindrical plug portion 55 which is press fitted in the lower end of the opening 36 and has a cylindrical portion 56 of smaller diameter to leave a passage 58. A radial opening 47a extends through the housing 26a into the passage 58 to form the output or control port. The axial opening 48 in insert 37a defines the inlet or supply port.

In the unenergized state, fluid flows from the controlled device through radial opening 47a, passage 58 around the ball 39 and opening 34 into the sump. When the solenoid is energized, fluid will flow from the inlet opening 48 through passage 58 to the outlet opening 47a.

The throughout rotational form of the insert 37a is less expensive to manufacture than insert 37, since the machined flats 40 are eliminated and there is no press fit plug 53.

There is a further difference in that the peripheral wall 29a is made part of the pole member 30a rather than housing 26a. Such an arrangement can be utilized where the lead wires are required to be positioned near the housing 26a.

Although the valve shown is particularly designed for use in a pulse width modulated mode, it can also be utilized in an on-off or steady state directional mode.

## Claims

1. A solenoid valve comprising
a valve housing (26, 26a), a coil assembly (50, 51) and a pole member (30, 30a) which include a valve chamber (60) having a first (35) and a second (38) seat, a ball (39) interposed between the first and second seats (35, 38) and having limited movement between said seats (35, 38), said valve housing (26, 26a) having a first transverse wall (27, 27a) and an extension (28, 28a) extending from said first transverse wall (27, 27a) in an axial direction away from said valve chamber (60),
said pole member (30, 30a) having a second transverse wall (32, 32a) extending radially outwardly and a pole piece (31) extending axially inwardly adjacent to said valve chamber (60),
a peripheral wall (29, 29a) extending between said first and second transverse walls (27, 27a, 32, 32a) and being connected thereto,

said pole piece (31), at the inner end thereof, having said first seat (35) and, along the axis of the device, an axial opening (34),
said axial extension (28, 28a) of said housing (26, 26a) having an axial opening (36) along the axis of the device characterized in that
spring means (43, 44) yieldingly urge said ball (39) into engagement with the second seat (38),
in that an insert (37, 37a) of non-magnetic material is positioned in said axial opening (36) of said axial extension (28, 28a) and forming, at the inner end thereof, said second seat (38) and, along the axis of the device, having an axial opening (48) useful for a supply port, said insert (37, 37a) also has surface portions (40, 56) spaced from the walls of the axial opening (36) of the extension (28, 28a) defining passages (41, 58) connected to the exterior surface of the axial extension (28, 28a) and being useful for a control port, the arrangement being such that when fluid is applied to the supply port (opening 48) and the coil (51) is de-energized, said spring means (43, 44) holds the ball (39) against the second seat (38) so shutting off said supply port while permitting communication between the control port (passages 41, 58) and the axial opening (34) in the pole piece (31) which is useful as return port, and when the coil (51) is energized, the ball (39) is drawn toward the first seat (35) to close communication to the return port opening (34) and permit flow from the supply port (opening 48) to the control port (passages 41, 58).

2. The solenoid valve set forth in claim 1 including aligned radial openings (47) in said axial extension (28) and said insert (37) as a portion of said supply port.

3. The solenoid valve set forth in claim 2 including a plug (53) closing the end of said axial opening (48) in said insert (37), while leaving the communication to said radial openings (47) uninterrupted.

4. The solenoid valve set forth in any of the claims 1 to 3, wherein said insert (37) is press fitted into the axial opening (36) of said housing (26) and said surface portions (40) are flat surfaces on opposed sides of said insert (37).

5. The solenoid valve set forth in claim 1 wherein said insert (37a) comprises a plug portion (55) press fitted in the axial opening (36) of said housing (26a), said insert (37a) having a cylindrical portion (56) of lesser cross sectional area than said opening (36) adjacent the second seat (38) thereby defining an annular passage (58) between the insert (37a, 55) and the walls of the opening (36), said axial extension (28a) including a radial passage (47a) as a portion of said control port from the exterior of said axial extension (28a) to said annular passage (58).

6. The solenoid valve set forth in any of claims 1 to 5, wherein said opening (34) in said pole piece (31), adjacent the first seat (35), has a narrow portion (46) through which a projection (44) of said spring means (43, 44) projects.

7. The solenoid valve set forth in claim 6, wherein said spring means (43, 44) comprises a compression spring (43) between said narrow portion (46) of said axial opening (34) in said pole piece (31) and a roll pin (45) press fitted into said opening (34).

8. The solenoid valve set forth in any of claims 1 to 7, wherein the major portion of said ball (39) is positioned within a valve chamber portion (62) arranged in the transverse wall (27, 27a) of the valve housing (26, 26a) and wherein the clearance between the ball (39) and the wall (27, 27a) ranges between 0,076 to 0,254 mm.

9. The solenoid valve set forth in any of claims 1 to 8, wherein said first seat (35) and said second seat (38) comprise opposed frustoconical surfaces.

10. The solenoid valve set forth in any of claims 1 to 9, wherein the clearance between the ball (39) and one seat (35), when it is in engagement with the other seat (38), ranges between 1,52 and 0,38 mm.

11. The solenoid valve set forth in any of claims 1 to 10, wherein said coil (51) is such that the valve can be operated in a pulse width modulated mode.

12. The solenoid valve set forth in claim 11, wherein said coil (51) is capable of being energized by operational frequencies from about 10 to about 100 Hertz such that the oil pressure can be accurately linearly regulated between 10 and 90 per cent of the input pressure.

**Patentansprüche**

1. Elektromagnetisch betätigbares Ventil mit folgenden Merkmalen:
es umfaßt ein Ventilgehäuse (26, 26a), eine Spulenanordnung (50, 51) und ein Polglied (30, 30a), die eine Ventilkammer (60) mit einem ersten (35) und zweiten (38) Ventilsitz und eine Kugel (39) umschließen, welche zwischen dem ersten und zweiten Ventilsitz (35, 38) eingefügt ist und beschränkte Bewegbarkeit zwischen diesen Sitzen (35, 38) zeigt,
das Ventilgehäuse (26, 26a) weist eine erste Querwand (27, 27a) und einen Fortsatz (28, 28a) auf, der sich axial von der ersten Querwand (27, 27a) in axialer Richtung weg von der Ventilkammer (60) erstreckt,
das Polglied (30, 30a) umfaßt eine zweite Querwand (32, 32a), die sich radial nach außen erstreckt, und ein Polstück (31) das sich axial einwärts, benachbart der Ventilkammer (60), erstreckt,
eine Randwand (29, 29a) erstreckt sich zwischen der ersten und zweiten Querwand (27, 27a, 32, 32a) und ist mit einer dieser Wände verbunden,
das Polstück (31) bestimmt am inneren Ende den ersten Ventilsitz (35) und besitzt entlang der Geräteachse eine axiale Öffnung (34),
der axiale Fortsatz (28, 28a) des Gehäuses (26, 26a) hat eine axiale Öffnung (36) entlang der Geräteachse, gekennzeichnet durch:
eine Federeinrichtung (43, 44) drängt die Kugel (39) in Anlage an den zweiten Ventilsitz (38),
ein Einsatz (37, 37a) aus nichtmagnetischem Material ist in der axialen Öffnung (36) des axialen Fortsatzes (28, 28a) angeordnet, bildet am inneren Ende den zweiten Ventilsitz (38) und besitzt entlang der Geräteachse eine axiale Öffnung (48), die als Zuführanschluß dienlich ist, der Einsatz (37, 37a) besitzt Oberflächenteile (40, 56), die von den Wandungen der axialen Öffnung (36) des Fortsatzes (28, 28a) einen Abstand einnehmen und dadurch Kanäle (41, 58) bilden, die mit dem Äußeren des axialen Fortsatzes (28, 28a) verbunden sind und als gesteuerter Anschluß dienlich sind, die Anordnung ist derart, daß, wenn Fluid dem Zuführanschluß (Öffnung 48) zugeführt und die Spule (51) nicht erregt ist, die Federeinrichtung (43, 44) die Kugel (39) gegen den zweiten Sitz (38) hält und so den Zuführanschluß sperrt, während eine Verbindung zwischen dem gesteuerten Anschluß (41, 58) und der axialen Öffnung (34) im Polstück (31) geschaffen wird, die als Rücklaufanschluß dienlich ist, und wenn die Spule erregt ist, die Kugel (39) auf den ersten Sitz (35) gezogen wird, die Verbindung zur Rücklaufanschlußöffnung (34) geschlossen wird und der Fluß von der Zuführanschlußöffnung (48) zum gesteuerten Anschluß (Kanäle 41, 58) ermöglicht wird.

2. Ventil nach Anspruch 1, dadurch gekennzeichnet, daß zueinander fluchtende radiale Öffnungen (47) im axialen Fortsatz (28) und im Einsatz (37) vorgesehen sind und einen Teil des Zuführanschlusses bilden.

3. Ventil nach Anspruch 2, dadurch gekennzeichnet, daß ein Stopfen (53) das Ende der axialen Öffnung (48) im Einsatz (37) verschließt und die Verbindung mit den radialen Öffnungen (47) bestehen läßt.

4. Ventil nach einem der Ansprüche 1 bis 3, dadurch gekennzeichnet, daß der Einsatz (37) mit Preßsitz in die axiale Öffnung (36) des Gehäuses (26) eingefügt ist und daß die Oberflächenteile (40) als abgeflachte Oberflächen an entgegengesetzten Seiten des Einsatzes (37) ausgebildet sind.

5. Ventil nach Anspruch 1, dadurch gekennzeichnet, daß der Einsatz (37a) einen stopfenförmigen Teil (55) aufweist, der mit Preßsitz in die axiale Öffnung (36) des Gehäuses (26a) eingefügt ist, daß der Einsatz (37a) ein zylindrisches Teil (56) von geringerer Querschnittsfläche als die Öffnung (36), benachbart dem zweiten Sitz (38), aufweist, wobei ein ringförmiger Kanal (58) zwischen dem Einsatz (37a, 55) und den Wandungen der Öffnung (36) gebildet wird und daß der axiale Fortsatz (28a) einen radialen Kanal (47a) als Teil des gesteuerten Anschlusses vom äußeren des axialen Fortsatzes (28a) zum ringförmigen Kanal (58) aufweist.

6. Ventil nach einem der Ansprüche 1 bis 5, dadurch gekennzeichnet, daß die Öffnung (34) im Polstück (31) nahe des ersten Sitzes (35) eine Engstelle (46) aufweist, durch die ein Vorsprung (44) der Federeinrichtung (43, 44) vorsteht.

7. Ventil nach Anspruch 6, dadurch gekennzeichnet, daß die Federeinrichtung (43, 44) eine Druckfeder (43) zwischen der Engstelle (46) der axialen Öffnung (34) im Polstück (31) und einem Hohlniet (45) aufweist, der in die Öffnung mit Preßsitz eingeführt ist.

8. Ventil nach einem der Ansprüche 1 bis 7, dadurch gekennzeichnet, daß der größere Teil der Kugel (39) innerhalb des Ventilkammerteils (62) angeordnet in der Querwand (27, 27a) des Gehäuses (26, 26a) gelegen ist und daß das Spiel zwischen Kugel (39) und Wandung (27, 27a) zwischen 0,076 und 0,254 mm beträgt.

9. Ventil nach einem der Ansprüche 1 bis 8, dadurch gekennzeichnet, daß der erste Sitz (35) und der zweite Sitz (38) jeweils sich gegenüberstehende konische Oberflächen aufweisen.

10. Ventil nach einem der Ansprüche 1 bis 9, dadurch gekennzeichnet, daß der Abstand zwischen der Kugel (39) und dem einen Sitz (35), wenn die Kugel am anderen Sitz (38) anliegt, im Bereich zwischen 1,52 und 0,38 mm liegt.

11. Ventil nach einem der Ansprüche 1 bis 10, dadurch gekennzeichnet, daß die Spule (51) im Hinblick auf den Betrieb des Ventils für Impulsbreitmodulation ausgelegt ist.

12. Ventil nach Anspruch 11, dadurch gekennzeichnet, daß die Spule (51) von einer Bauart zur Erregung durch Betriebsfrequenzen von etwa 30 bis etwa 100 Hz ausgelegt ist, so daß der Öldruck genau linear zwischen 10 und 90% des Eingangsdrucks geregelt werden kann.

**Revendications**

1. Vanne à commande électromagnétique comportant un corps (26, 26a), une bobine (50, 51) et une pièce polaire (30, 30a) qui comporte une chambre (60) ayant un premier siège (35) et un second (38), une bille (39) interposée entre le premier et le second siège (35, 38) et ayant un déplacement limité entre lesdits sièges (35, 38); ledit corps (26, 26a) ayant une première paroi transversale (27, 27a) et un prolongement (28, 28a) s'étendant de ladite première paroi transversale (27, 27a) dans une direction axiale s'éloignant de ladite chambre (60), ladite pièce polaire (30, 30a) ayant une seconde paroi transversale (32, 32a) s'étendant radialement vers l'extérieur et un noyau polaire (31) s'étendant axialement vers l'intérieur en étant adjacent à ladite chambre (60).

Une paroi périphérique (29, 29a) s'étendant entre lesdites première et seconde parois transversales (27, 27a, 32, 32a) et étant raccordée à celles-ci, ledit noyau polaire (31) ayant à son extrémité interne ledit premier siège (35) et dans l'axe du dispositif un trou axial (34), ledit prolongement axial (28, 28a) dudit corps (26, 26a) ayant un trou axial (36) dans l'axe du dispositif, caractérisée en ce qu'un dispositif à ressort (43, 44) pousse élastiquement ladite bille (39) contre le second siège (38), en ce qu'un insert (37, 37a) en matériau non magnétique est positionné dans ledit trou axial (36) dudit prolongement axial (28, 28a), formant à son extrémité interne ledit second siège (38) et ayant, suivant l'axe du dispositif, un trou axial (48) utilisable comme ouverture d'admission, en ce que ledit insert (37, 37a) possède également des faces (40, 56) distantes des parois du trou axial (36) du prolongement (28, 28a) pour laisser des passages (41, 58) raccordés à la surface extérieure du prolongement axial (28, 28a) et utilisables comme sorties contrôlées, la disposition étant telle que, lorsque du fluide est appliqué à l'ouverture d'admission (ouverture 48) et que la bobine (51) n'est pas excitée, ledit dispositif à ressort (43, 44) maintient la bille (39) contre le second siège (38) fermant ainsi ladite ouverture d'admission, tout en établissant une communication entre la sortie contrôlée (passages 41, 58) et le trou axial (34) du noyau polaire (31) qui est utilisable comme ouverture de retour, et, lorsque la bobine (51) est excitée, la bille (39) est attirée contre le premier siège (35) pour fermer la communication avec l'ouverture de retour (34) et permettre l'écoulement de l'ouverture d'admission (ouverture 48) vers la sortie contrôlée (passages 41, 58).

2. Vanne suivant la revendication 1, caractérisée en ce que des ouvertures radiales alignées (47) dans ledit prolongement axial (28) et ledit ressort (37) forment une partie de ladite ouverture d'admission.

3. Vanne suivant la revendication 2, caractérisée en ce qu'un bouchon (53) ferme l'extrémité du trou axial (48) dudit insert (37), tout en laissant libre la communication vers lesdites ouvertures radiales (47).

4. Vanne suivant l'une quelconque des revendications 1 à 3, caractérisée en ce que ledit insert (37) est emmanché de force dans le trou axial (36) dudit corps (26) et lesdites surfaces (40) sont des faces planes situées sur des côtés opposés dudit insert (37).

5. Vanne suivant la revendication 1, caractérisée en ce que ledit insert (37a) comporte une partie formant bouchon (55) emmanchée de force dans le trou axial (36) dudit corps (26a), ledit insert (37a) ayant une partie cylindrique (56) de plus faible section transversale que ledit trou (36) adjacent au second siège (38), définissant ainsi un passage annulaire (58) entre l'insert (37a, 55) et les parois du trou (36), ledit prolongement axial (28a) incluant un passage radial (47a) formant une partie de ladite ouverture contrôlée entre l'extérieur dudit prolongement axial (28a) et ledit passage annulaire (58).

6. Vanne suivant l'une quelconque des revendications 1 à 5, caractérisée en ce que ledit trou (34) dans ledit noyau polaire (31) a une partie étranglée (46) adjacente au premier siège (35) à travers laquelle émerge une avancée (44) dudit dispositif à ressort (43, 44).

7. Vanne suivant la revendication 6, caractérisée en ce que ledit dispositif à ressort (43, 44) comporte un ressort de compression (43) entre ladite partie étranglée (46) dudit trou axial (34) dans ledit noyau polaire (31) et un goujon cylindrique (45) emmanché de force dans ledit trou (34).

8. Vanne suivant l'une quelconque des revendications 1 à 7, caractérisée en ce que la plus grande partie de la bille (39) est située dans la partie (62) de la chambre prévue dans la paroi transversale (27, 27a) du corps (26, 26a) de la vanne et en ce que le jeu entre la bille (39) et la paroi (27, 27a) se situe entre 0,076 et 0,254 mm.

9. Vanne suivant l'une quelconque des revendications 1 à 8, caractérisée en ce que ledit premier siège (35) et ledit second siège (38) comportent des surfaces sensiblement coniques opposées.

10. Vanne suivant l'une quelconque des revendications 1 à 9, caractérisée en ce que le jeu entre la bille (39) et l'un des sièges (35) se situe entre 1,52 et 0,38 mm, lorsque celle-ci est en contact avec l'autre siège (38).

11. Vanne suivant l'une quelconque des revendications 1 à 10, caractérisée en ce que ladite bobine (51) est telle que la vanne peut être actionnée selon un mode à modulation en larguers d'impulsions.

12. Vanne suivant la revendication 11, caractérisée en ce que ladite bobine (51) est en mesure d'être alimentée par des fréquences opérationnelles d'environ 10 à 100 hertz, telles que la pression d'huile peut être réglée linéairement avec précision entre 10 et 90 pour cent de la pression d'alimentation.

0 160 120

## FIG.1

## FIG.2

1

0 160 120

FIG.3

FIG.5

FIG.4

2

FIG.6

FIG.7